# EUROPEAN PATENT SPECIFICATION

(11) **EP 3 895 985 B1**
(45) Date of publication and mention of the grant of the patent: **01.07.2026**
(21) Application number: 20208575.9
(22) Date of filing: 19.11.2020
(51) Int. Cl.: B64C 31/036, B64D 17/00

(54) **PARAGLIDER CANOPY AND PARAGLIDER INCLUDING THE SAME**
GLEITSCHIRMKAPPE UND GLEITSCHIRM DAMIT
VOILURE DE PARACHUTE ET PARACHUTE LA COMPRENANT

(30) Priority: 14.04.2020 KR 20200045494
(43) Date of publication of application: 20.10.2021
(60) Divisional application: 22204174.1
(73) Proprietor: UNIST (Ulsan National Institute of Science and Technology), Ulsan 44919 (KR); Gin Gliders Inc., Yongin-si, Gyeonggi-do 17036 (KR); Seoul National University R & DB Foundation, Seoul 08826 (KR)
(72) Inventor: KIM, Joo Ha, 44919 Ulsan (KR); SHIN, Jeong Han, 44919 Ulsan (KR); CHAE, Seok Bong, 44919 Ulsan (KR); CHOI, Hae Cheon, 06289 Seoul (KR); SONG, Gin Seok, 17036 Gyeonggi-do (KR)
(74) Representative: Botti & Ferrari S.p.A.

(56) References cited:
- WO-A1-2014/016901
- DE-U1- 29 721 797
- DE-U1- 8 807 211
- DE-U1- 9 015 289
- FR-A1- 2 636 597
- JP-U- H0 490 494

## Description

### BACKGROUND

### 1. Field

The present invention relates to a paraglider canopy and a paraglider including the same, and more particularly, to a paraglider canopy capable of improving the aerodynamic performance of the canopy and a paraglider including the same.

### 2. Description of Related Art

Paragliders, which are one gliding means that can generate lift using wind and glide through the air, are mainly used for leisure activities of a large number of people living in a stressful modern society. Due to having an intermediate characteristic between the gliding characteristic of hang gliders and the falling characteristic of parachutes, the paragliders have a high gliding ability and high safety at the same time and are being widely used.

Generally, the paragliders include a canopy which expands due to the inflow of air and generates lift that allows gliding. In this case, there is an increasing need to reduce separation bubbles and flow separation that occur at the canopy during flight, but research thereon is not sufficient.
**Document** DE8807211U1 **discloses a paraglider canopy comprising tubercles at the leading edge.**
**Document** WO2014016901A1 **discloses a paraglider canopy comprising un upper cover.**

### SUMMARY

The above problem is solved by a canopy and a paraglider including the same canopy according to the invention as disclosed respectively in the attached claims 1-2.

A canopy of a paraglider according to an embodiment of the present invention includes: an upper wing; a lower wing disposed below the upper wing and spaced apart from the upper wing; a plurality of air cells each formed independently between the upper wing and the lower wing; and an air inlet formed in a leading edge of the upper wing and the lower wing to allow outside air to enter each of the plurality of air cells, wherein the leading edge of the upper wing and the lower wing may be formed of tubercles.

The embodiments are provided to make the disclosure of the present invention complete and to completely inform those of ordinary skill in the art to which the present invention pertains (hereinafter, referred to as "those of ordinary skill in the art") of the scope of the invention.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1A is a plan view of a conventional canopy;
FIG. 1B is a lateral view of the conventional canopy;
FIG. 2A is a plan view of a canopy according to an example not being part of the claimed subject-matter;
FIG. 2B is a lateral view of the canopy according to an example not being part of the claimed subject-matter;
FIG. 2C is a perspective view of the canopy according to an example not being part of the claimed subject-matter;
FIG. 2D is a front view of the canopy according to an example not being part of the claimed subject-matter;
FIG. 2E is a lateral view of the canopy according to an example not being part of the claimed subject-matter;
FIG. 2F is a plan view of the canopy according to an example not being part of the claimed subject-matter;
FIG. 3A is a view illustrating a leading edge and a trailing edge of the canopy according to an example not being part of the claimed subject-matter;
FIGS. 3B to 3F are views showing graphs relating to the aerodynamic performance of a paraglider including the canopy according to an example not being part of the claimed subject-matter;
FIG. 4A is a view illustrating a horizontal distance traveled during a fall according to an example not being part of the claimed subject-matter;
FIG. 4B is a view showing a graph of the horizontal distance traveled during the fall according to an example not being part of the claimed subject-matter;
FIG. 5A is a plan view of a conventional canopy;
FIG. 5B is a lateral view of the conventional canopy;
FIG. 6A is a plan view of a canopy according to an embodiment of the present invention;
FIG. 6B is a lateral view of the canopy according to an embodiment of the present invention;
FIG. 7A is a perspective view of a conventional canopy;
FIG. 7B is a plan view of the conventional canopy;
FIG. 7C is a front view of the conventional canopy;
FIG. 8A is a perspective view of a canopy according to an example not being part of the claimed subject-matter;
FIG. 8B is a plan view of the canopy according to an example not being part of the claimed subject-matter;
FIG. 8C is a front view of the canopy according to an example not being part of the claimed subject-matter;
FIG. 9 is a perspective view of a conventional canopy;
FIG. 10A is a view illustrating a wingtip structure of a canopy according to an example not being part of the claimed subject-matter; and
FIG. 10B is a view illustrating another wingtip structure of the canopy according to an example not being part of the claimed subject-matter.

### DETAILED DESCRIPTION

Various modifications may be applied to the present invention, and the present invention may have various embodiments. Specific embodiments illustrated in the drawings will be described in detail below.

Various features of the invention disclosed in the claims below may be better understood from the drawings and the detailed description herein. Devices, methods, methods of manufacture, and various embodiments disclosed herein are provided for illustrative purposes. Structures and functional features disclosed herein are intended to allow those of ordinary skill in the art to practice various embodiments in detail and are not intended to limit the scope of the invention. Terms and sentences disclosed herein are intended to make it easier to understand various features of the invention disclosed herein and are not intended to limit the scope of the invention.

In describing the present invention, when it is deemed that detailed description of a known related art may unnecessarily obscure the gist of the present invention, the detailed description thereof will be omitted.

Hereinafter, a paraglider canopy and a paraglider including the same according to an embodiment of the present invention will be described.

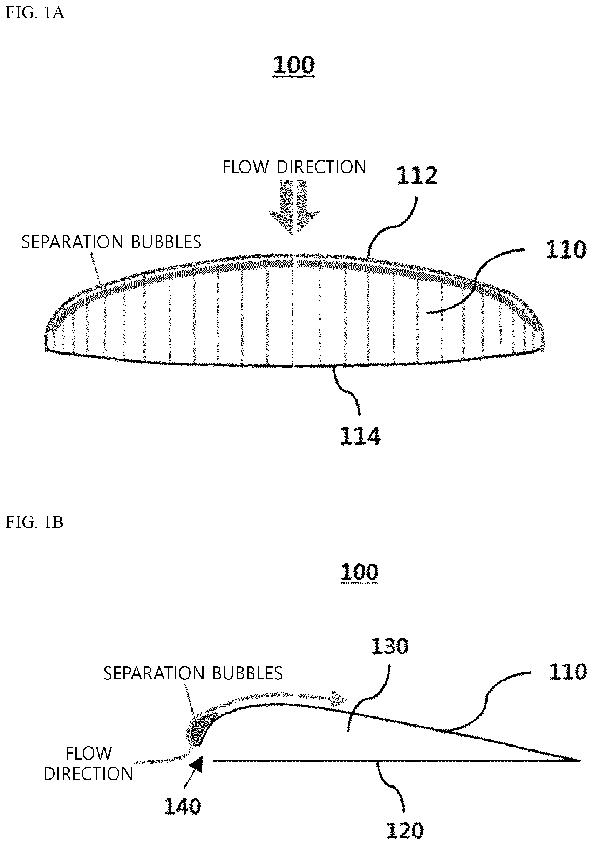

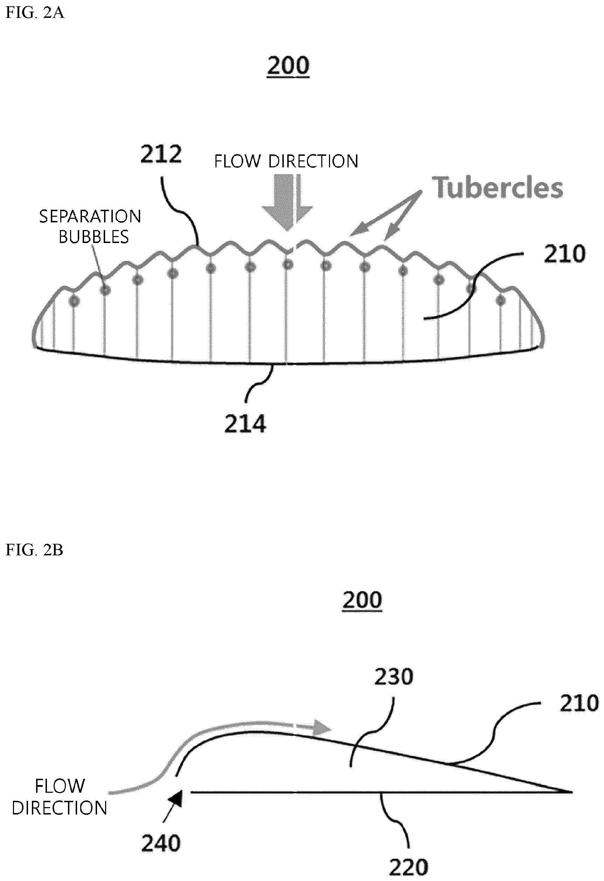

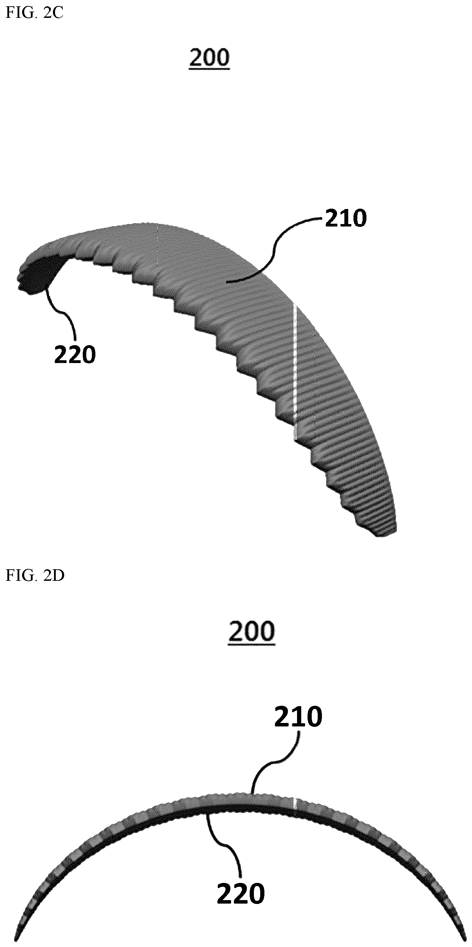

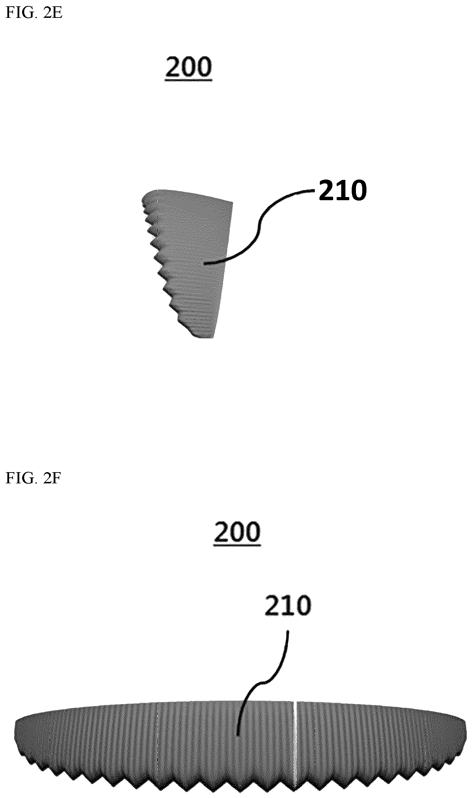

FIG. 1A is a plan view of a conventional canopy 100. FIG. 1B is a lateral view of the conventional canopy 100. FIG. 2A is a plan view of a canopy 200 according to an example not being part of the claimed subject-matter. FIG. 2B is a lateral view of the canopy 200 according to an example not being part of the claimed subject-matter. FIG. 2C is a perspective view of the canopy 200 according to an example not being part of the claimed subject-matter. FIG. 2D is a front view of the canopy 200 according to an example not being part of the claimed subject-matter. FIG. 2E is a lateral view of the canopy 200 according to an example not being part of the claimed subject-matter. FIG. 2F is a plan view of the canopy 200 according to an example not being part of the claimed subject-matter.

Referring to FIGS. 1A and 1B, the conventional canopy 100 may include an upper wing 110, a lower wing 120 disposed below the upper wing 110 and spaced apart from the upper wing 110, a plurality of air cells 130 each formed independently between the upper wing 110 and the lower wing 120, and an air inlet 140 formed in a leading edge 112 of the upper wing 110 and the lower wing 120 to allow outside air to enter each of the plurality of air cells 130.

That is, in the case of the conventional canopy 100, since the leading edge 112 of the canopy 100 is formed in the shape of a blunt body, separation bubbles may be formed on the corresponding portion. Due to the separation bubbles, the aerodynamic performance of the conventional canopy 100 may be degraded.

Referring to FIGS. 2A to 2F, the canopy 200 according to an example not being part of the claimed subject-matter may include an upper wing 210, a lower wing 220 disposed below the upper wing 210 and spaced apart from the upper wing 210, a plurality of air cells 230 each formed independently between the upper wing 210 and the lower wing 220, and an air inlet 240 formed in a leading edge 212 of the upper wing 210 and the lower wing 220 to allow outside air to enter each of the plurality of air cells 230.

In this case, the leading edge 212 of the upper wing 210 and the lower wing 220 according to the present invention may be formed of tubercles. Here, the term "tubercle" may refer to a nodule, a wave, a protrusion, a sawtooth, or anything equivalent thereto.

The tubercles of the leading edge 212 may be formed on all or part of each of the upper wing 210 and the lower wing 220. For example, the tubercles of the leading edge 212 may be formed in a region excluding both ends of each of the upper wing 210 and the lower wing 220.

The leading edge 212 of the upper wing 210 and the lower wing 220 that corresponds to each of the plurality of air cells 230 may protrude forward or be recessed rearward so that tubercles are formed.

In the case of the canopy 200 having the leading edge formed of tubercles, a lift coefficient may be higher, a stall angle of attack may be increased, and a lift-to-drag ratio may also be increased at the same angle of attack as compared to the conventional canopy 100.

That is, in the case of the canopy 200 according toan example not being part of the claimed subject-matter, since the formation of separation bubbles is delayed by a vortex which is generated due to the tubercles of the leading edge of the canopy 200, and thus an increase of lift and decrease of drag are achieved, the overall aerodynamic performance of a paraglider including the canopy 200 according to an example not being part of the claimed subject-matter may be improved.

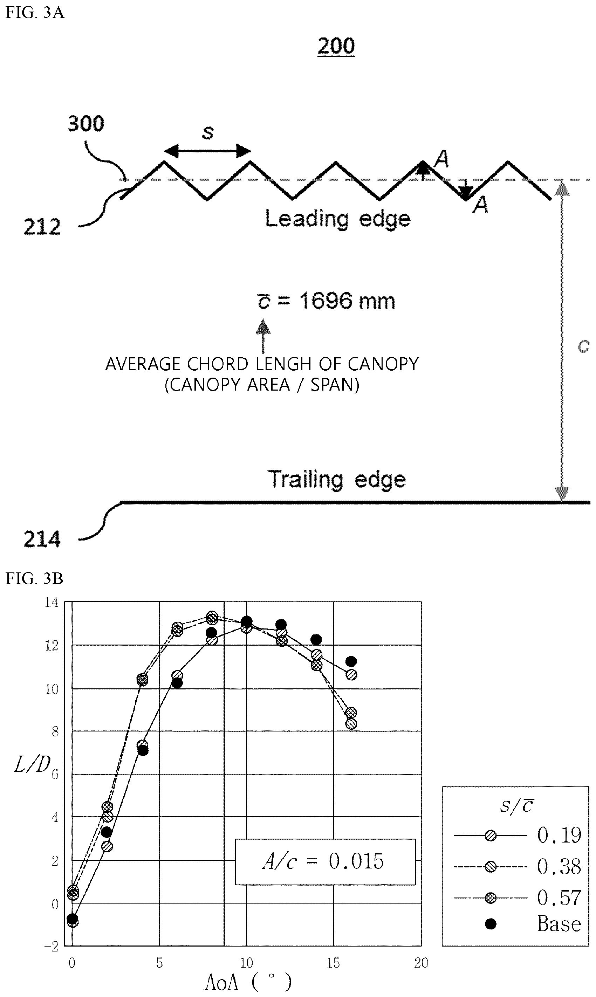

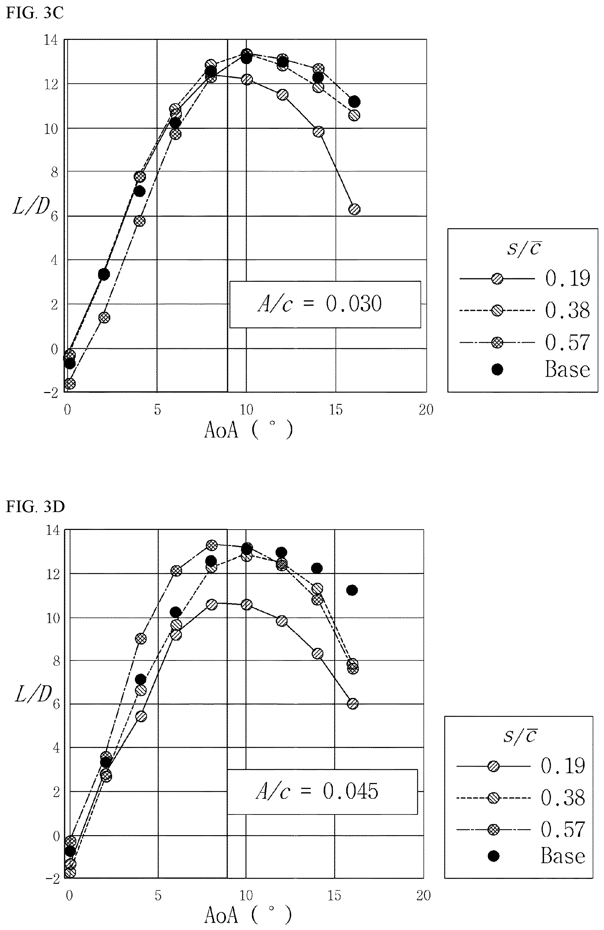

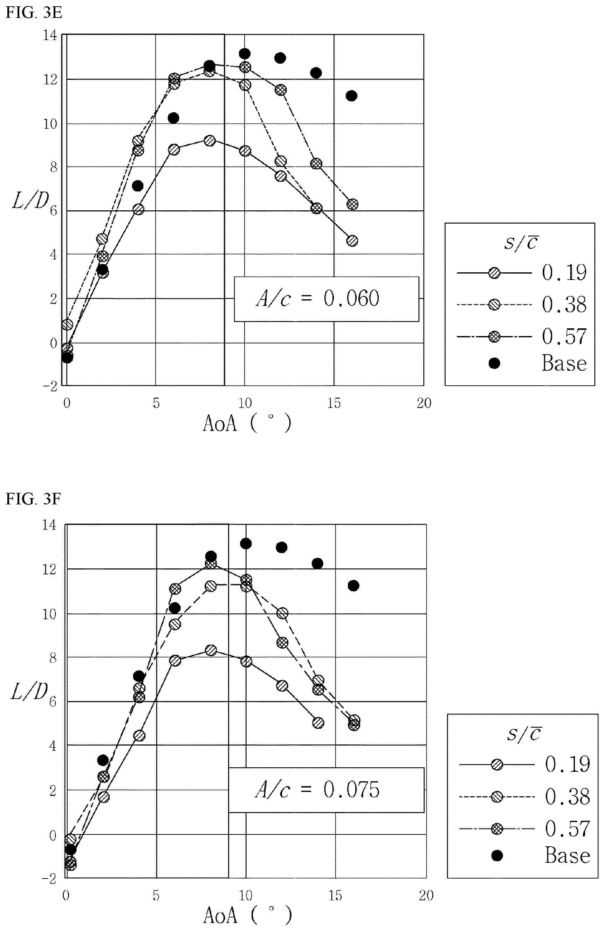

FIG. 3A is a view illustrating the leading edge 212 and a trailing edge 214 of the canopy 200 according to an example not being part of the claimed subject-matter. FIGS. 3B to 3F are views showing graphs relating to the aerodynamic performance of the paraglider including the canopy 200 according to an example not being part of the claimed subject-matter.

Referring to FIG. 3A, the leading edge 212 of the canopy 200 according to an example not being part of the claimed subject-matter may be formed of tubercles. In this case, in the plurality of tubercles, a distance between neighboring tubercles may be represented by s, a distance from an average line 300 to the tubercle may be represented by A, and an average chord length of the canopy 200 (canopy area per span) may be represented by c̅.

In this case, the canopy area based on the average chord length may be the same for the conventional canopy 100 and the canopy 200 according to the present invention.

Parameters relating to an example not being part of the claimed subject-matter for measuring the aerodynamic performance of a paraglider may be shown as Table 1 below.

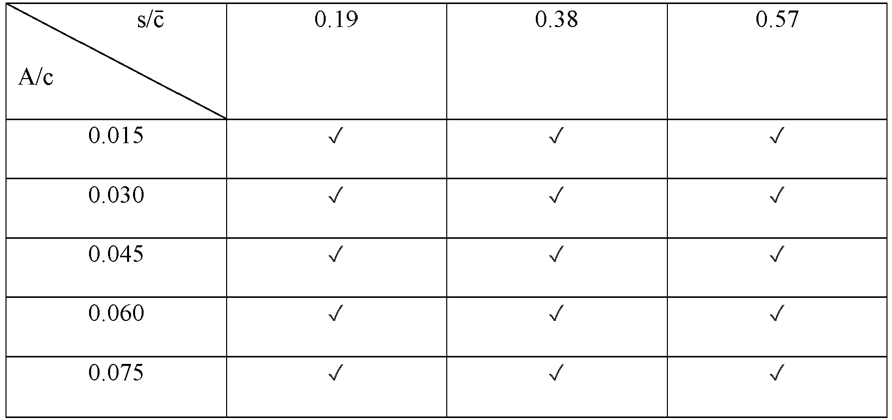

Here, referring to FIGS. 3B to 3F, when lift-to-drag ratios according to the s/c̅ values are compared for various A/c values, when an angle of attack (AoA) of an actual paraglider is in a range of 0° to 8°, it can be seen that, in an experimental result in the corresponding range, the canopy 200 having the tubercles formed according to the present invention has a higher lift-to-drag ratio as compared to the conventional canopy 100 (base).

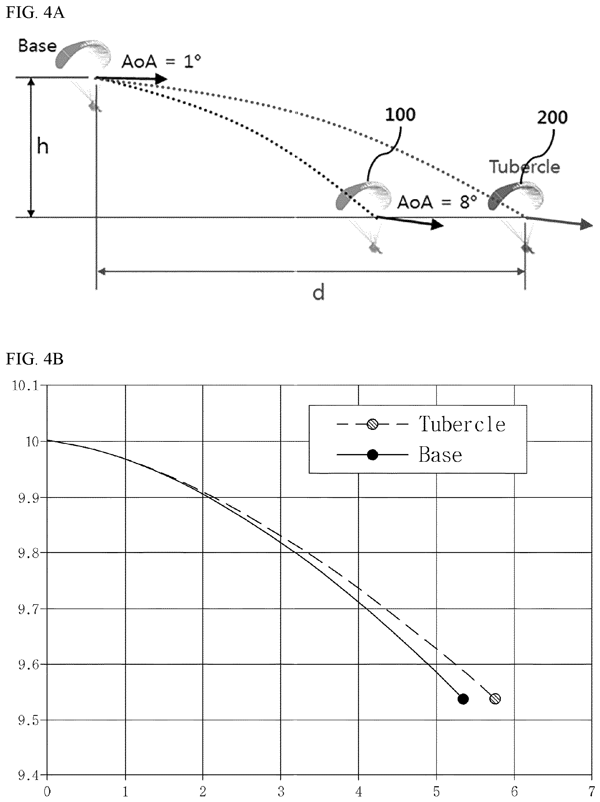

FIG. 4A is a view illustrating a horizontal distance traveled during a fall according to an example not being part of the claimed subject-matter. FIG. 4B is a view showing a graph of the horizontal distance traveled during the fall according to an example not being part of the claimed subject-matter.

Referring to FIG. 4A, when an angle of attack (AoA) of an actual paraglider is in a range of 0° to 8°, the glide ratio (the horizontal distance traveled divided by the vertical distance traveled) may be calculated for a paraglider including the conventional canopy 100 and a paraglider including the canopy 200 according to an example not being part of the claimed subject-matter.

Then, a rate of change of the glide ratio of the paraglider including the canopy 200 according to the present invention may be calculated relative to the glide ratio of the paraglider including the conventional canopy 100.

Referring to FIG. 4B, in a case in which 1°<AoA<8°, the glide ratio of the canopy 200 according to an example not being part of the claimed subject-matter is changed as shown in Table 2 below relative to the glide ratio of the conventional canopy 100. In this case, for example, a glide ratio of the conventional canopy 100 that serves as a reference may be 11.42.

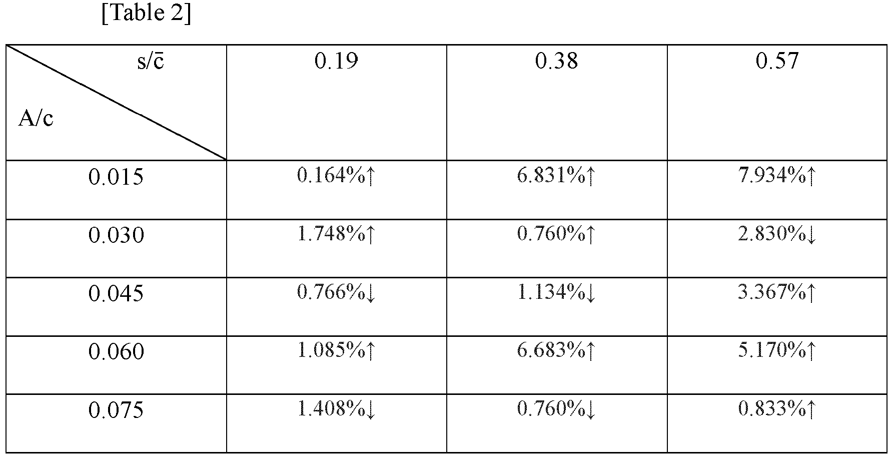

In this case, referring to Table 2 above, in a case in which 1°<AoA<8°, it can be seen that, when the A/c value is 0.015 and the s/c̅ value is 0.57, the glide ratio of the canopy 200 according to an example not being part of the claimed subject-matter is increased by 7.934% as compared to the glide ratio of the conventional canopy 100.

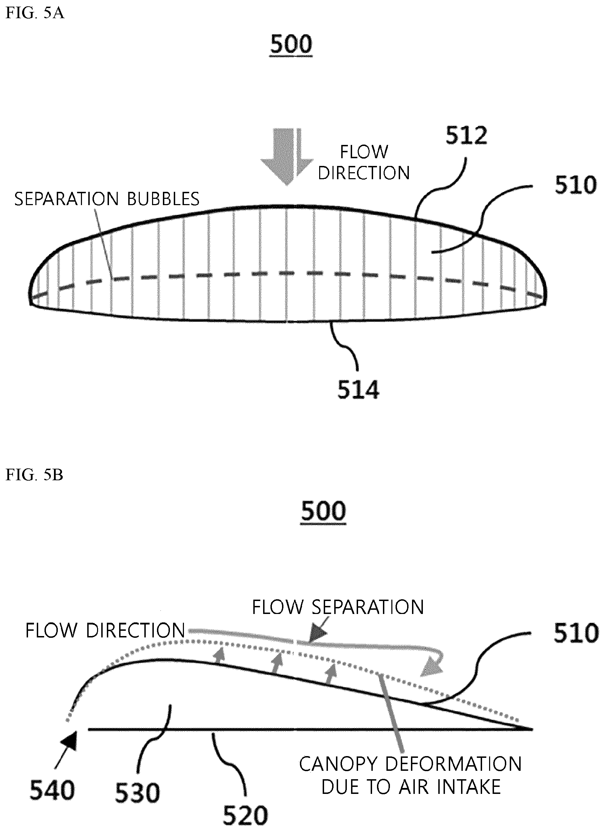

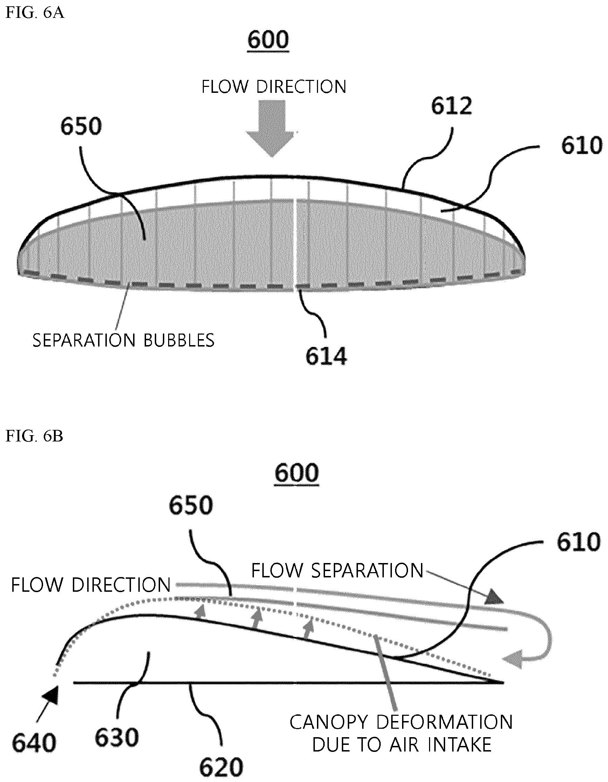

FIG. 5A is a plan view of a conventional canopy 500. FIG. 5B is a lateral view of the conventional canopy 500. FIG. 6A is a plan view of a canopy 600 according to a second embodiment of the present invention. FIG. 6B is a lateral view of the canopy 600 according to the second embodiment of the present invention.

Referring to FIGS. 5A and 5B, the conventional canopy 500 may include an upper wing 510, a lower wing 520 disposed below the upper wing 510 and spaced apart from the upper wing 510, a plurality of air cells 530 each formed independently between the upper wing 510 and the lower wing 520, and an air inlet 540 formed in a leading edge 512 of the upper wing 510 and the lower wing 520 to allow outside air to enter each of the plurality of air cells 530.

In this case, the upper wing 510 of the conventional canopy 500 may expand due to air intake by the air cell 530, and thus flow separation may be formed at an intermediate portion of an upper end of the upper wing 510.

In the case of the conventional canopy 500, the canopy 500 expands due to air intake according to an increase in the speed of the paraglider, and thus a slope of a trailing edge 514 of the canopy 500 increases. Here, as an angle of inclination of the trailing edge 514 of the upper wing 510 increases, the flow separation becomes larger, and drag is increased due to the flow separation.

On the other hand, referring to FIGS. 6A and 6B, the canopy 600 according to the present invention may include an upper wing 610, a lower wing 620 disposed below the upper wing 610 and spaced apart from the upper wing 610, a plurality of air cells 630 each formed independently between the upper wing 610 and the lower wing 620, and an air inlet 640 formed in a leading edge 612 of the upper wing 610 and the lower wing 620 to allow outside air to enter each of the plurality of air cells 630.

In this case, the canopy 600 according to the present invention further includes a cover member 650 having one end coupled to an upper portion of the upper wing 610. Here, the other end of the cover member 650 may be separated from the upper wing 610 according to a pressure difference between an upper end part and a lower end part of the cover member 650. Thus, flow separation at the canopy 600 may be delayed toward a trailing edge 614.

That is, by using the cover member 650 to delay flow separation, the canopy 600 according to the present invention may reduce the drag acting on the canopy 600.

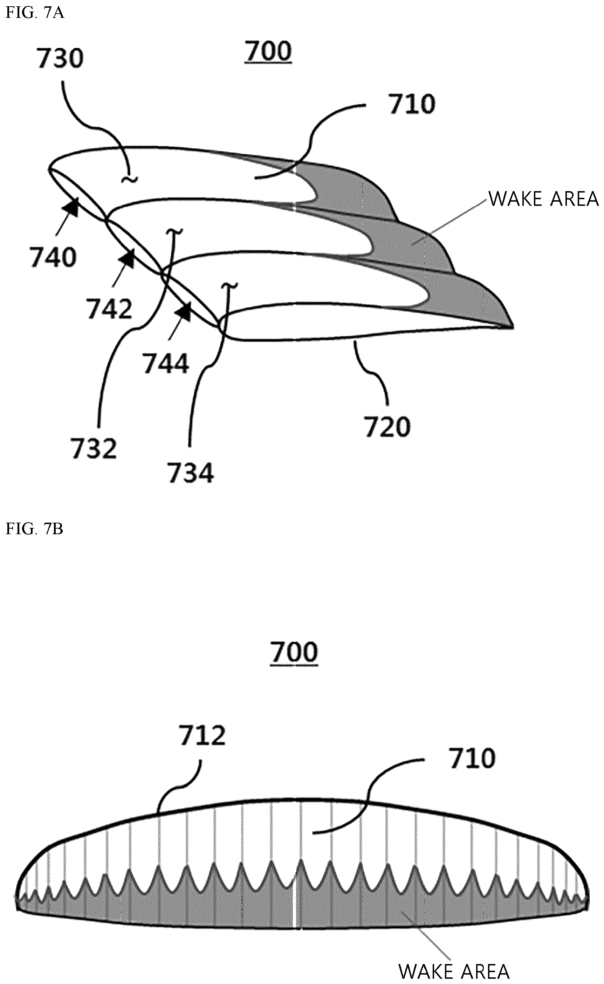

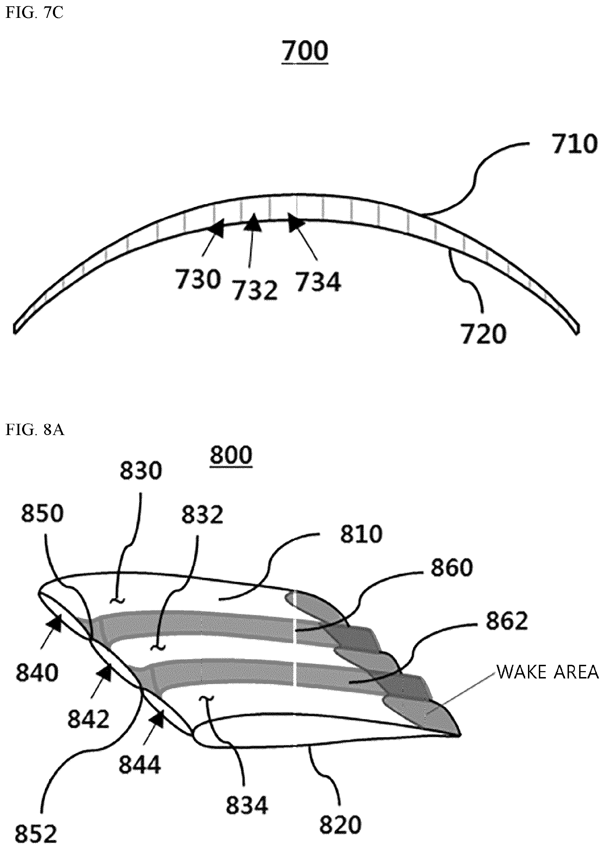

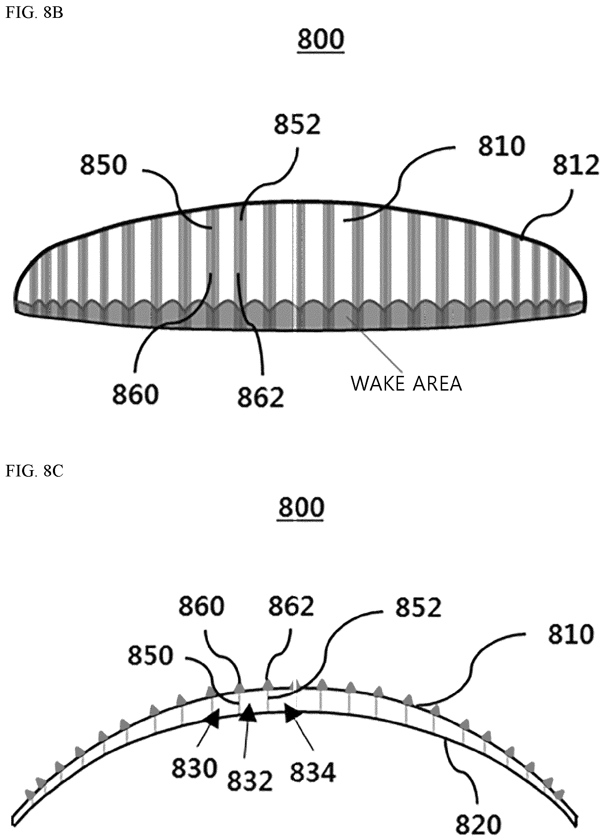

FIG. 7A is a perspective view of a conventional canopy 700. FIG. 7B is a plan view of the conventional canopy 700. FIG. 7C is a front view of the conventional canopy 700. FIG. 8A is a perspective view of a canopy 800 according to a third embodiment of the present invention. FIG. 8B is a plan view of the canopy 800 according to the third embodiment of the present invention. FIG. 8C is a front view of the canopy 800 according to the third embodiment of the present invention.

Referring to FIGS. 7A to 7C, the conventional canopy 700 may include an upper wing 710, a lower wing 720 disposed below the upper wing 710 and spaced apart from the upper wing 710, a plurality of air cells 730, 732, and 734 each formed independently between the upper wing 710 and the lower wing 720, and air inlets 740, 742, and 744 formed in a leading edge 712 of the upper wing 710 and the lower wing 720 to allow outside air to enter each of the plurality of air cells 730, 732, and 734.

In this case, as an angle of attack of the conventional canopy 700 increases, flow separation occurs and a wake area is formed. The wake area and flow separation cause a lift-to-drag ratio of the canopy to be decreased.

On the other hand, referring to FIGS. 8A to 8C, the canopy 800 according to an example not being part of the claimed subject-matter may include an upper wing 810, a lower wing 820 disposed below the upper wing 810 and spaced apart from the upper wing 810, a plurality of air cells 830, 832, and 834 each formed independently between the upper wing 810 and the lower wing 820, and air inlets 840, 842, and 844 formed in a leading edge 812 of the upper wing 810 and the lower wing 820 to allow outside air to enter each of the plurality of air cells 830, 832, and 834.

The canopy 800 according to an example not being part of the claimed subject-matter may further include ridge members 860 and 862 formed to protrude upward from an upper portion of the upper wing 810 based on boundaries 850 and 852 between two adjacent air cells.

In this case, in a case in which the ridge members 860 and 862 are formed on the upper portion of the upper wing 810, higher momentum is generated due to a vortex generated by the ridge members 860 and 862, making it easier for the flow of air to remain attached to a surface of the upper wing 810 and thus delaying the flow separation.

That is, the ridge members 860 and 862 according to an example not being part of the claimed subject-matter may increase the lift of the canopy 800 and improve the overall aerodynamic performance of the paraglider including the canopy 800. Therefore, as the ridge members 860 and 862 are formed on the boundaries 850 and 852 between the air cells of the canopy 800 according to the present invention, flow separation at a rear end may be delayed to reduce a wake area, and the aerodynamic performance of the canopy 800 may be improved.

Although only three air cells 840, 842, and 844 and only two ridge members 860 and 862 are illustrated in FIGS. 8A to 8C, the number of air cells and ridge members is not limited thereto.

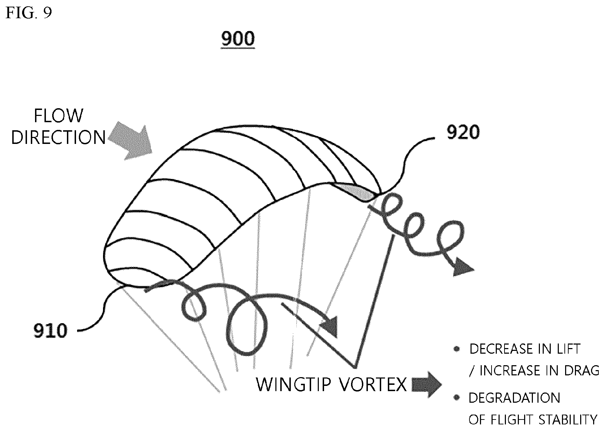

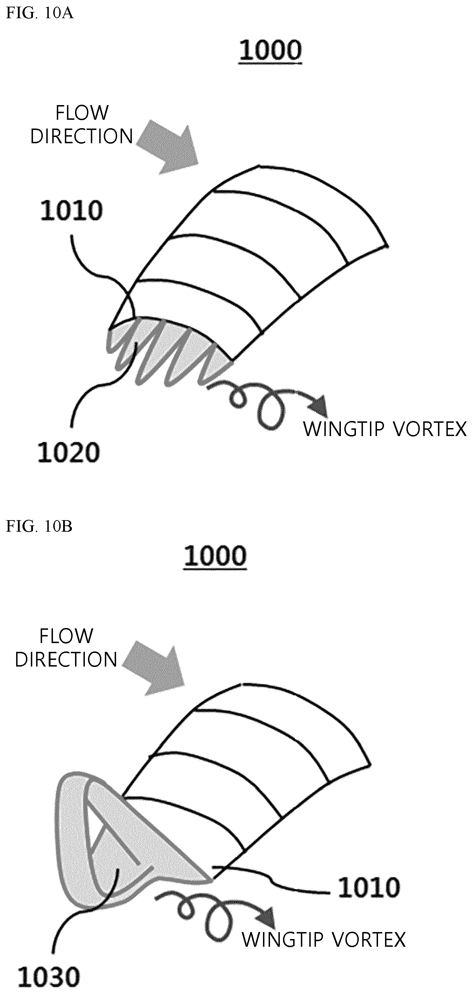

FIG. 9 is a perspective view of a conventional canopy 900. FIG. 10A is a view illustrating a wingtip structure of a canopy 1000 according to a fourth embodiment of the present invention. FIG. 10B is a view illustrating another wingtip structure of the canopy 1000 according to the fourth embodiment of the present invention.

Referring to FIG. 9, the conventional canopy 900 may include wingtips 910 and 920 formed at both ends. In this case, a wingtip vortex that is generated at the wingtips 910 and 920 due to a pressure difference between an upper surface and a lower surface of the canopy 900 may cause a decrease in lift and an increase in drag of the canopy 900, and thus flight stability may be degraded and the wingtips may collapse.

The conventional canopy 900 may include the configuration of the canopy 100 shown in FIGS. 1A and 1B.

On the other hand, referring to FIG. 10A, the canopy 1000 according to an example not being part of the claimed subject-matter may further include at least one stick-shaped slot winglet 1020 formed at a wingtip 1010 of the canopy 1000. In this case, the shape of the slot winglet 1020 is not limited to the stick shape.

Also, referring to FIG. 10B, the canopy 1000 according to an example not being part of the claimed subject-matter may further include a ring-shaped spiroid winglet 1030 formed at the wingtip 1010 of the canopy 1000.

In this case, due to the inclusion of the spiroid winglet 1030, the canopy 1000 according to an example not being part of the claimed subject-matter may have a higher stall angle of attack and have a higher lift coefficient at the same angle of attack as compared to the conventional canopy 900.

Also, although drag increases after the stall angle of attack in the case of the conventional canopy 900, the extent to which drag increases may be alleviated by the spiroid winglet 1030, and the lift-to-drag ratio according to the angle of attack may also be higher as a whole.

That is, since the canopy 1000 according to an example not being part of the claimed subject-matter includes a winglet formed at the wingtip 1010, a vortex generated at the wingtip 1010 may be reduced. For example, since the wingtip 1010 is slightly lifted upward due to the winglet, an air flow due to lift (or reaction) may occur in a direction toward an end of a wing. Thus, the air flow may cancel out a flow of air that tends to flow over an upper side of the wing, and the vortex may be reduced.

Therefore, by adding the slot winglet 1020 or spiroid winglet 1030 to the wingtip 1010 of the canopy 1000 according to an example not being part of the claimed subject-matter, a wingtip vortex may be reduced at the wingtip 1010 of the canopy 1000 and high aerodynamic performance may be achieved.

According to an example not being part of the claimed subject-matter, tubercles formed on a leading edge can improve a lift coefficient of a canopy, increase a stall angle of attack, and also increase a lift-to-drag ratio.

In addition, according to an embodiment of the present invention, by using a cover member to delay flow separation, the drag acting on the canopy can be reduced.

In addition, according to an example not being part of the claimed subject-matter, higher momentum is generated by a ridge member, making it easier for the flow of air to remain attached to a surface of an upper wing and thus delaying the flow separation.

In addition, according to an example not being part of the claimed subject-matter, by adding a slot winglet or spiroid winglet to a wingtip of the canopy, a wingtip vortex at the wingtip of the canopy can be reduced and high aerodynamic performance can be achieved.

The advantageous effects of the present invention are not limited to those described above, and other potential effects expected from the technical features of the present invention should be clearly understood from the description above.

The above description is merely illustrative of the technical idea of the present invention, and those of ordinary skill in the art may make various changes and modifications without departing from the essential characteristics of the present invention.

Therefore, the embodiments disclosed herein are for describing, instead of limiting, the technical idea of the present invention, and the scope of the present invention is to be interpreted from the claims.

## Claims

1. A canopy (200, 600, 800, 1000) of a paraglider, the canopy (200, 600, 800, 1000) comprising:
an upper wing (210, 610, 810);
a lower wing (220, 620, 820) disposed below the upper wing (210, 610, 810) and spaced apart from the upper wing (210, 610, 810);
a plurality of air cells (230, 630, 830) each formed independently between the upper wing (210, 610, 810) and the lower wing (220, 620, 820);
an air inlet (240, 640, 840) formed in a leading edge (212, 612, 812) of the upper wing (210, 610, 810) and the lower wing (220, 620, 820) to allow outside air to enter each of the plurality of air cells (230, 630, 840),
a cover member (650) having one end coupled to an upper portion of the upper wing (210, 610, 810),
**characterized in that** the other end of the cover member (650) is separated from the upper wing (210, 610, 810) according to a pressure difference between an upper end part and a lower end part of the cover member (650).

2. A paraglider comprising the canopy (200, 600, 800, 1000) of claim 1.

## Patentansprüche

1. Kappe (200, 600, 800, 1000) eines Gleitschirms, wobei die Kappe (200, 600, 800, 1000) umfasst:
einen oberen Flügel (210, 610, 810);
einen unteren Flügel (220, 620, 820), der unter dem oberen Flügel (210, 610, 810) angeordnet und von dem oberen Flügel (210, 610, 810) beabstandet ist;
eine Vielzahl von Luftzellen (230, 630, 830), die jeweils unabhängig zwischen dem oberen Flügel (210, 610, 810) und dem unteren Flügel (220, 620, 820) gebildet sind;
einen Lufteinlass (240, 640, 840), der in einer voreilenden Kante (212, 612, 812) des oberen Flügels (210, 610, 810) und des unteren Flügels (220, 620, 820) gebildet ist, um zu erlauben, dass Außenluft in jede der Vielzahl von Luftzellen (230, 630, 840) einströmt,
ein Abdeckelement (650), das ein Ende aufweist, das mit einem oberen Abschnitt des oberen Flügels (210, 610, 810) gekoppelt ist,
**dadurch gekennzeichnet, dass** das andere Ende des Abdeckelements (650) von dem oberen Flügel (210, 610, 810) gemäß einer Druckdifferenz zwischen einem oberen Endteil und einem unteren Endteil des Abdeckelements (650) getrennt ist.

2. Gleitschirm umfassend die Kappe (200, 600, 800, 100) von Anspruch 1.

## Revendications

1. Voile (200, 600, 800, 1000) de parapente, la voile (200, 600, 800, 1000) comprenant:
une aile supérieure (210, 610, 810);
une aile inférieure (220, 620, 820) disposée sous l'aile supérieure (210, 610, 810) et espacée de l'aile supérieure (210, 610, 810);
une pluralité de cellules d'air (230, 630, 830) formées chacune individuellement entre l'aile supérieure (210, 610, 810) et l'aile inférieure (220, 620, 820);
une prise d'air (240, 640, 840) formée dans un bord d'attaque (212, 612, 812) de l'aile supérieure (210, 610, 810) et de l'aile inférieure (220, 620, 820) pour permettre à l'air extérieur d'entrer dans chacune de la pluralité de cellules d'air (230, 630, 840),
un élément de couverture (650) ayant une extrémité couplée à une portion supérieure de l'aile supérieure (210, 610, 810),
**caractérisée en ce que** l'autre extrémité de l'élément de couverture (650) est séparée de l'aile supérieure (210, 610, 810) en fonction d'une différence de pression entre une portion d'extrémité supérieure et une portion d'extrémité inférieure de l'élément de couverture (650).

2. Parapente comprenant la voile (200, 600, 800, 1000) selon la revendication 1.
